# EUROPÄISCHE PATENTANMELDUNG

(11) **EP 3 118 554 A1**
(43) Veröffentlichungstag der Anmeldung: **18.01.2017**
(21) Anmeldenummer: 15177235.7
(22) Anmeldetag: 17.07.2015
(51) Int. Cl.: F27D 1/16, F27D 21/00

(54) **VERFAHREN INSBESONDERE ZUR AUSBESSERUNG EINER FEUERFESTAUSKLEIDUNG EINES METALLURGISCHEN GEFÄSSES IM HEISSEN ZUSTAND**

(71) Anmelder: Refractory Intellectual Property GmbH & Co. KG, 1100 Wien (AT)
(72) Erfinder: Lammer, Gregor, AT-1030 Wien (AT); Cepak, Dr. Alexander, AT-1150 Wien (AT)
(74) Vertreter: Luchs, Willi

(57) **Zusammenfassung**

Ein Verfahren bezieht sich insbesondere auf die Ausbesserung einer Feuerfestauskleidung eines metallurgischen Gefässes (10) im heissen Zustand. Diese Ausbesserung erfolgt dabei mittels einer Auftragevorrichtung (15). Zudem wird mittels einer Einrichtung (20) eine Erfassung zumindest der verschlissenen Bereiche und eine Überwachung der Ausbesserung durchgeführt. Dabei wird vor, während und/oder nach dem Auftragen zumindest ein Teilbereich der auszubessernden Stellen (13) der Feuerfestauskleidung (12) des Gefässes (10) bzw. der Spritzstrahl (18) fotographisch mit Visualisierung der Temperaturbereiche (26, 27, 28) erfasst und daraus erfolgt eine Auswertung hinsichtlich verschiedener Parameter, wie Eigenschaften, Schichtdicke und/oder Verteilung des Auftragsmaterials. Es hat sich herausgestellt, dass durch diese Visualisierung der Temperaturbereiche der auszubessernden Stellen bzw. des Feuerfestmaterials beim Auftragen verschiedene Parameter sehr genau festgestellt werden können und sich daraus eine optimales Beschichten der Ausmauerung erzielen lässt.

## Beschreibung

Die Erfindung betrifft ein Verfahren insbesondere zur Ausbesserung einer Feuerfestauskleidung eines metallurgischen Gefässes im heissen Zustand nach dem Oberbegriff des Anspruchs 1 bzw. einer dazugehörigen Einrichtung nach Anspruch 8.

Gemäss der Druckschrift EP-A-0 039 212 ist eine ferngesteuerte Einspritzvorrichtung zur Ausbesserung einer Feuerfestauskleidung eines metallurgischen Gefässes bei erhöhter Temperatur geoffenbart. Diese Vorrichtung verfügt über eine drehbare, vertikale Leitung, die an ihrem unteren Ende eine Düse aufweist. Es wird dabei die Zuführung eines fluidisierten Stroms von partikelförmigem Feuerfestmaterial unter Druck zu der Leitung zugeführt. Durch Ausrichtungsmittel kann die Leitung sowie die Düse horizontal und vertikal innerhalb des Gefässes in der Nähe eines auszubessernden Auskleidungsbereichs ausgerichtet werden.

Es ist eine an der Leitung in der Nähe der Düse angebrachte Fernsehkamera zur Betrachtung des Inneren des Gefässes zur Feststellung des genannten Bereichs und zur Überwachung der Ausbesserung vorgesehen. Diese Kamera ist in einem Gehäuse angeordnet, welches mit einer transparenten, hitzewiderstandsfesten Öffnung in der Sichtlinie der Linse ausgestattet ist. Ausserdem ist eine Kühleinrichtung an dieses Gehäuse zur Kühlhaltung der Kamera und es sind darin Temperaturfühlmittel mit einer Verbindung nach aussen angeschlossen. Mit Hilfe dieser Kamera werden einem Benutzer die auszubessernden Stellen visualisiert und es wird ihm damit ermöglicht, die Spritzlanze von ausserhalb des heissen Gefässes zu bedienen.

Ein weiteres Reparatur- und Überwachungssystem einer Feuerfestauskleidung ist in der Druckschrift US-A-6,780,351 erläutert, bei dem ein Laser in einen heissen Ofen bzw. ein Gefäss geführt wird und darin Laserstrahlen reflektiert werden, um eine dreidimensionale Messung des Innern des Ofens bzw. Gefässes als Istwert zu erzielen. Diese Istwerte werden dann mit Referenzwerten verglichen und in der Folge wird eine Spritzlanze gesteuert geführt, um Feuerfestmaterial unter Berücksichtigung einer Anzahl von physikalischen Variablen bezogen auf das Gefäss einzuspritzen.

Der vorliegenden Erfindung wurde demgegenüber die Aufgabe zugrundegelegt, ein Verfahren zu schaffen, mit dem eine Feuerfestauskleidung eines Metallschmelze aufnehmenden Gefässes mit einer verbesserten Genauigkeit und Qualität repariert werden kann.

Erfindungsgemäss ist diese Aufgabe nach den Merkmalen des Anspruchs 1 bzw. den Merkmalen der Einrichtung nach Anspruch 8 gelöst.

Das Verfahren nach der Erfindung sieht vor, dass vor, während und/oder nach dem Auftragen zumindest ein Teilbereich der auszubessernden Feuerfestauskleidung des Gefässes bzw. der Spritzstrahl fotographisch mit Visualisierung der Temperaturbereiche erfasst wird und daraus eine Auswertung hinsichtlich verschiedener Parameter, wie Eigenschaften, Schichtdicke und/oder Verteilung des Auftragsmaterials, erfolgt.

Es hat sich herausgestellt, dass durch diese Visualisierung der Temperaturbereiche der auszubessernden Stellen bzw. des Feuerfestmaterials beim Auftragen verschiedene Parameter sehr genau festgestellt werden können und sich daraus eine optimales Beschichten der Ausmauerung erzielen lässt.

Sehr vorteilhaft umfasst die Einrichtung wenigstens eine bildgebende Einheit, vorzugsweise eine Wärmebildkamera, mittels welcher von der Aussenseite des Gefässes diese Anzahl von Aufnahmen mit Visualisierung der Temperaturbereiche erfasst wird.

Diese Erfassung des aktuellen Zustandes der Auftragung des Feuerfestmaterials auf die auszubessernden Stellen in der Gefässausmauerung ermöglicht nach einem Vergleich mit Sollvorgaben von gespeicherten Aufnahmen eine unmittelbare Änderung der Ansteuerung dieser Auftragevorrichtung und/oder eine Anpassung der vorprogrammierten Steuerung für nachfolgende Behandlungen.

Weitere vorteilhafte Einzelheiten dieses Verfahrens im Rahmen der Erfindung sind in den abhängigen Ansprüchen definiert.

Ein Ausführungsbeispiel der Erfindung ist nachfolgend anhand einer Zeichnung näher erläutert. Es zeigt:
- Fig. 1: eine schematische Darstellung einer Einrichtung mit einer Wärmebildkamera und eines teilweise im Schnitt dargestellten metallurgischen Gefässes zur Durchführung des erfindungsgemässen Verfahrens; und
- Fig. 2: eine mittels einer Wärmebildkamera nach Fig. 1 erstellte fotographische Aufnahme primär des Innern des Gefässes und einer Spritzlanze mit dem Spritzstrahl während der Einspritzung von Feuerfestmaterial.

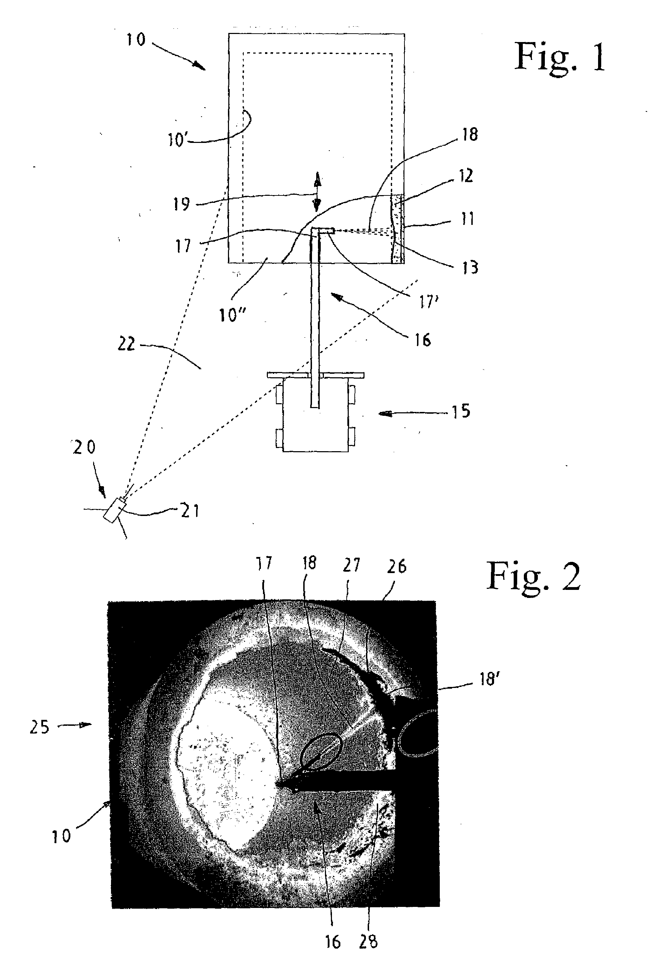

Fig. 1 zeigt schematisch ein metallurgisches Gefäss 10 mit einem Stahlmantel 11 und einer feuerfesten Auskleidung 12 bestehend aus einer Ausmauerung mit feuerfesten Steinen und gegebenenfalls zusätzlich aus aufgespritzten Schichten. Bei dem metallurgischen Gefäss 10 kann es sich zum Beispiel um eine Stahlschmelze enthaltende Pfanne bzw. ein Verteilergefäss bei Stranggiessanlagen oder auch um Konverter oder Elektroofen handeln.

Bei diesen metallurgischen Gefässen 10 ist es üblich und notwendig, eine Ausbesserung der Feuerfestauskleidung 12 an den verschlissenen Stellen 13 oder auch an der gesamten Innenwandung 10' nach einer bestimmten Betriebszeit mittels einer an sich bekannten als Manipulator bzw. als Roboter ausgebildeten Auftragevorrichtung 15 durchzuführen, wobei dies im heissen Zustand des jeweiligen Gefässes erfolgt, damit dieses aufzutragende Material in nützlicher Zeit trocknet und sich dabei ausreichend mit der bestehenden Ausmauerung verbindet.

Diese Auftragevorrichtung 15 weist eine Spritzlanze 16 mit wenigstens einem Einspritzkopf 17 auf, mittels dem vorzugsweise fluidisiertes Feuerfestmaterial durch einen erzeugten Spritzstrahl 18 aufgetragen wird. Die abgewinkelte Spritzlanze 16 mit einer quer angeordneten Austrittsdüse 17' wird von der verstellbaren Auftragevorrichtung 15 während dem Auftragen einerseits gedreht und zusätzlich je nach Bedarf in Achsrichtung bewegt, so dass das Gefäss 10 auch in Höhenrichtung 19 mit Spritzgut versehen werden kann.

Erfindungsgemäss wird vor, während und/oder nach dem Auftragen zumindest ein Teilbereich der auszubessernden Stellen 13 der Feuerfestauskleidung 12 des Gefässes 10 bzw. der Spritzstrahl 18 fotographisch mit Visualisierung der Temperaturbereiche erfasst und daraus eine Auswertung hinsichtlich verschiedener Parameter insbesondere zu den Eigenschaften, Schichtdicke und/oder die Verteilung des Auftragsmaterials, erfolgen kann.

Zweckmässigerweise wird dafür eine Einrichtung 20 mit wenigstens einer bildgebenden Einheit, vorzugsweise einer Wärmebildkamera 21, verwendet, die ausserhalb des Gefässes 10 positioniert ist und mittels der vorzugsweise während dem Auftragen durch eine Anzahl von fotographischen Aufnahmen 25 mit Visualisierung der Temperaturbereiche 26, 27, 28 erfasst wird, wie eine solche Aufnahme 25 in Fig. 2 veranschaulicht ist.

Diese Einrichtung 20 ist mit ausreichender Distanz zu dem Gefäss 10, ausserhalb seiner Mittelachse und dabei seitlich zu der Auftragevorrichtung 15 so platziert, dass die Kamera 21 einen Aufnahmekegel 22 bildet, der diesen Teilbereich mit annährend der Öffnung 10" des Gefässes 10 und zudem den Spritzstrahl 18 mit der von diesem beaufschlagten Fläche 18' bei der Auskleidung 12 erfasst.

Zudem ist diese Einrichtung 20 mit nicht näher gezeigten Schutzschilden oder ähnlichem vor der Hitzeabstrahlung vom Gefäss her geschützt, so dass die Kamera nicht die vorgegebenen Aufwärmungstemperaturen überschreitet.

Gemäss dieser Aufnahme 25 nach Fig. 2 sind diesen bestimmten Temperaturen eines jeweiligen Temperaturbereichs 26, 27, 28 entsprechende Farben zugeordnet. Je nach Verwendung des Typs der Wärmebildkamera 21 können unterschiedliche Farben für dieselben Temperaturen vorgesehen sein.

Diese Aufnahmen 25 der bildgebenden Einheit können in Echtzeit während dem Auftragen des Feuerfestmaterials erfolgen und dabei erfasste und sofort ausgewertete Parameter mit Sollvorgaben von Aufnahmen bei der Auftragevorrichtung verglichen und die Auftragevorrichtung entsprechend angesteuert werden.

Selbstverständlich kann im Rahmen der Erfindung auch nur vor und/oder nach dem Auftragen eine oder mehrere fotographische Aufnahmen 25 erstellt werden. Dies hängt mitunter von dem Ausmass der zu reparierenden Stellen 13 ab. Bei einer relativ kleinen Reparatur kann eine Aufnahme 25 vor und nach dem Auftragen genügen. Mit einer Aufnahme nach dem Auftragen kann zudem festgestellt werden, ob sich das aufgespritzte Material wegen fehlender Haftung wieder gelöst hat.

Als Wärmebildkameras 21 eignen sich vor allem solche, die mit Infrarotstrahlung arbeiten und die einen Temperarturbereich zwischen annähernd der Raumtemperatur und vorteilhaft mindestens annähernd 1'500°C erfassen. Als Beispiele eignen sich am Markt erhältliche Wärmebildkameras von FLIR, T600 Series oder von InfraTec der Typenreihe VarioCAM mit einer maximalen Auflösung von über 500 Pixel.

Des Weiteren können mit diesen erfindungsgemässen Bildern verschiedene Parameter des Spritzstrahls evaluiert werden, mitunter der Förderdruck, die Beladung, der Spritzwinkel des Strahls, der Abstand der Spritzlanze von der Innenseite des Gefässes und/oder die Geometrie Düsenaustritts der Spritzlanze. Die Temperatur des Feuerfestmaterials beim Austritt aus dem Spritzkopf entspricht üblicherweise annähernd der Raumtemperatur. Sie kann aber je nach Anforderung auch höher vorgesehen sein, beispielsweise zwecks Temperierung des auftragenden Materials.

Zudem können die Aufnahmen der bildgebenden Einheit gespeichert und durch Berechnungen mittels eines Softwareprogramms und daraus folgenden Analysen ausgewertet und damit die Steuerung der Lanze für die laufenden als auch die nachfolgenden Reparatureinsätze verändert und damit verbessert werden.

Ein weiterer Vorteil im Rahmen der Erfindung besteht darin, dass sich aus den Aufnahmen und den ermittelten Temperaturbereichen die Wandstärken der Feuerfestauskleidung vor und nach dem Auftragen berechnen lassen.

Die Erfindung ist mit dem obigen Ausführungsbeispiel ausreichend dargetan. Im Prinzip könnte auch mehr als eine Wärmebildkamera vorgesehen sein. Es sind auch nicht alle möglichen Auswertungen aus diesen Aufnahmen erläutert. Eine solche Kamera könnte auch bei ausreichender Wärmeisolierung im Innern des Gefässes vorzugsweise beim Spritzkopf angeordnet sein und dabei aber so angeordnet ist, dass der Spritzstrahl erfasst ist.

Diese fotographische Visualisierung der Temperaturbereiche könnte auch durch Videoaufnahmen erfolgen.

Die Ausbesserung könnte grundsätzlich auch bei Auslassöffnungen bei den Gefässen erfolgen.

## Patentansprüche

1. Verfahren insbesondere zur Ausbesserung einer Feuerfestauskleidung eines metallurgischen Gefässes (10) im heissen Zustand, bei dem diese Ausbesserung mittels einer Auftragevorrichtung (15) erfolgt, wobei mittels einer Einrichtung (20) eine Erfassung zumindest der verschlissenen Bereiche und eine Überwachung der Ausbesserung erfolgt, **dadurch gekennzeichnet, dass**
vor, während und/oder nach dem Auftragen zumindest ein Teilbereich der auszubessernden Stellen (13) der Feuerfestauskleidung (12) des Gefässes (10) bzw. der Spritzstrahl (18) fotographisch mit Visualisierung der Temperaturbereiche (26, 27, 28) erfasst wird und daraus eine Auswertung hinsichtlich verschiedener Parameter, wie Eigenschaften, Schichtdicke und/oder Verteilung des Auftragsmaterials, erfolgt.

2. Verfahren nach Anspruch 1, **dadurch gekennzeichnet, dass** die Einrichtung (20) wenigstens eine bildgebende Einheit umfasst, vorzugsweise eine Wärmebildkamera (21), mittels welcher von der Aussenseite des Gefässes (10) vor, während und/oder nach dem Auftragen eine Anzahl von fotographischen Aufnahmen (25) mit Visualisierung der Temperaturbereiche (26, 27, 28) erstellt werden.

3. Verfahren nach Anspruch 1 oder 2, **dadurch gekennzeichnet, dass** die Einrichtung (20) mit ausreichender Distanz zu diesem Gefäss (10) und seitlich zu der Auftragevorrichtung (15) so platziert ist, dass die Wärmebildkamera (21) einen Aufnahmekegel (22) bildet, der diesen Teilbereich der auszubessernden Stellen (13) mit annährend der Öffnung (10") des Gefässes (10) und zudem den Spritzstrahl (18) mit der von diesem beaufschlagten Fläche (18') erfasst.

4. Verfahren nach einem der vorhergehenden Ansprüche 1 bis 3, **dadurch gekennzeichnet, dass** die Aufnahmen (25) der bildgebenden Einheit gespeichert und durch Berechnungen mittels eines Softwareprogramms und daraus folgenden Analysen ausgewertet werden.

5. Verfahren nach einem der vorhergehenden Ansprüche 1 bis 4, **dadurch gekennzeichnet, dass** die Aufnahmen (25) der bildgebenden Einheit in Echtzeit während dem Auftragen des Feuerfestmaterials erfolgen und dabei Parameter zu dem Auftragen bei der Auftragevorrichtung (15) mit Sollvorgaben von gespeicherten Aufnahmen verglichen und die Auftragevorrichtung (15) während dem Auftragen unmittelbar angesteuert und/oder die vorprogrammierte Steuerung angepasst wird.

6. Verfahren nach einem der vorhergehenden Ansprüche 1 bis 5, **dadurch gekennzeichnet, dass** als Auftragevorrichtung (15) eine Einspritzvorrichtung (17) mit wenigstens einer Spritzlanze (16) vorgesehen ist, bei der das Feuerfestmaterial durch einen erzeugbaren Spritzstrahl (18) aufgetragen wird, wobei verschiedene Parameter desselben, mitunter der Förderdruck, die Beladung, der Spritzwinkel des Strahls, der Abstand der Spritzlanze von der Innenseite des Gefässes und/oder die Geometrie Düsenaustritts der Spritzlanze aufgrund der Aufnahmen der bildgebenden Einheit erkennbar bzw. direkt oder indirekt feststellbar sind.

7. Verfahren nach einem der vorhergehenden Ansprüche 1 bis 6, **dadurch gekennzeichnet, dass** aus den Aufnahmen (25) und den ermittelten Temperaturbereichen (26, 27, 28) die Wandstärken der Feuerfestauskleidung (12) vor und nach dem Auftragen berechnet werden können.

8. Einrichtung zur Durchführung des Verfahrens nach einem der vorhergehenden Ansprüche 1 bis 7, **dadurch gekennzeichnet, dass** sie wenigstens eine bildgebende Einheit umfasst, vorzugsweise eine Wärmebildkamera (21), mittels welcher Aufnahmen mit Visualisierung der Temperaturbereiche erstellt werden.

9. Einrichtung nach Anspruch 8, **dadurch gekennzeichnet, dass** die Wärmebildkamera (21) auf Infrarotstrahlung basiert und mit ihr die Temperaturbereiche durch unterschiedliche Farben visualisiert werden.

10. Einrichtung nach Anspruch 8 oder 9, **dadurch gekennzeichnet, dass** mit der Wärmebildkamera (21) ein Temperarturbereich zwischen annähernd Raumtemperatur und mindestens 1'500°C erfassbar ist.

11. Einrichtung nach Anspruch 8, 9 oder 10, **dadurch gekennzeichnet, dass** wenigstens eine bildgebende Einheit, vorzugsweise eine Wärmebildkamera (21), im Innern des Gefässes (10), vorzugsweise beim Spritzkopf (17), angeordnet ist.
